# EUROPÄISCHE PATENTSCHRIFT

(11) **EP 1 576 914 B1**
(45) Veröffentlichungstag und Bekanntmachung des Hinweises auf die Patenterteilung: **22.08.2007**
(21) Anmeldenummer: 05001775.5
(22) Anmeldetag: 28.01.2005
(51) Int. Cl.: A47J 37/07, A47J 45/10

(54) **Halter**
Holder
Poignée

(30) Priorität: 17.03.2004 DE 102004012957
(43) Veröffentlichungstag der Anmeldung: 21.09.2005
(73) Patentinhaber: Gummi Noller GmbH & Co. KG, 73614 Schorndorf-Miedelsbach (DE)
(72) Erfinder: Baukloh, Horst, 58540 Meinerzhagen (DE)
(74) Vertreter: Dörner, Lothar

(56) Entgegenhaltungen:
- FR-A- 2 668 461
- FR-A- 2 705 551
- FR-A- 2 843 869

## Beschreibung

Die Erfindung betrifft einen Halter, insbesondere zur Handhabung von direkt über einem Feuer beheizbaren Konserven, im Wesentlichen bestehend aus einer Platte.

Zur Zubereitung von warmen Speisen unterwegs, insbesondere unter freiem Himmel, beispielsweise beim Camping und beim Militär, werden häufig Konserven mit Fertiggerichten verwendet. Diese werden direkt über dem Feuer erhitzt. Als Feuerstelle dienen beispielsweise Propan- oder Butangaspatronen oder auch Trockenbrennstoffbriketts (z.B. "ESBIT-Würfel"). Zur Erhitzung der Konserven mit Hilfe solcher Trockenbrennstoffkörper kommen kleine, Platz sparende Taschenkocher zum Einsatz, welche den Trockenbrennstoff aufnehmen und gleichzeitig eine Aufnahme für die zu erhitzende Konserve direkt über dem Feuer bieten. Hat das Fertiggericht in der Konserve die gewünschte Temperatur erreicht, stellt sich das Problem, dass die Konserve dann selbst eine so hohe Temperatur aufweist, dass sie mit bloßen Fingern kaum noch handhabbar ist. Zur Handhabung der heißen Konserven werden oftmals Haushaltsgeräte wie Dosenöffner oder auch Rohrzangen missbraucht. Diese Hilfsmittel sind zum einen sperrig, sodass sie die in der Regel ohnehin knappen Platzressourcen beanspruchen, zum anderen sind sie nicht gleichermaßen für die unterschiedlichen Abmessungen der Konserven geeignet. Darüber hinaus kann es bei zweckentfremdeten Gebrauch von Hilfsmitteln wie beispielsweise Röhrzangen zu ungewollten Beschädigungen der Konserven kommen.

Ein Halter ist aus der FR 2668461 A bekannt.

Zudem ist aus der FR 2 668 461 B1 ein Einmalgriff zum Greifen und Handhaben von Konserven für aufzuwärmende Nahrungsmittel bekannt, der im Wesentlichen aus einer rechteckigen Metallplatte besteht. Der Griffhebel weist Befestigungsnasen und eine Befestigungsplatte auf, die zur Klemmung der jeweiligen Konserve dienen. Der bekannte Griffhebel weist den Nachteil auf, dass er relativ lang ist und daher nicht besonders Platz sparend ist. Zudem ist der Hebel mit Konserve schwierig zu handhaben, da der bekannte Griffhebel rechtwinklig zur Oberfläche der Konserve nach oben steht und sich daher in einer ungünstigen Griffposition befindet.

Hier will die Erfindung Abhilfe schaffen. Der Erfindung liegt die Aufgabe zugrunde, einen Halter, insbesondere zur Handhabung von direkt über einem Feuer beheizten Konserven zu schaffen, der für unterschiedliche Konservenformen einsetzbar, Platz sparend und ergonomisch günstig zu handhaben ist. Gemäß der Erfindung wird diese Aufgabe dadurch gelöst, dass die Platte die Form eines weitgehend rechteckigen Grundkörpers mit angeformten Spatel aufweist, wobei in der Verlängerung beider Längskanten des Spatels jeweils mindestens eine Aussparung in den Grundkörper eingebracht ist und in mindestens einer Außenkante des Grundkörpers eine weitgehend rechteckige Aussparung vorgesehen ist.

Mit der Erfindung ist ein Halter, insbesondere zur Handhabung von direkt über einem Feuer beheizten Konserven geschaffen, der für unterschiedliche Konserven einsetzbar ist. Durch die Gestaltung in Form einer Platte ist dieser sehr Platz sparend, da der Halter im Ausgangszustand im Wesentlichen zweidimensional ist. Die Platte wird erst unmittelbar vor dem Einsatz in die Form des dann dreidimensionalen Halters gebracht. Zudem ist der Halter ergonomisch günstig zu handhaben.

In Ausgestaltung der Erfindung weist die Aussparung mindestens eine Hinterschneidung auf, wodurch eine Nase gebildet ist. Diese Nase greift bei der Aufnahme der Konserve hinter deren Bördelrand, wodurch eine sichere Handhabung der Konserve gewährleistet ist.

Bevorzugt ist die Hinterschneidung auf der dem Spatel zugewandten Seite der Platte angeordnet. Diese Ausbildung erweist sich als vorteilhaft, da bei den Konserven üblicher Weise der Bördelrand auf der Oberseite der Konserve angeordnet ist.

In Weiterbildung der Erfindung weist die Platte mindestens eine Rippe auf. Hierdurch ist eine erhöhte Stabilität des Halters erzielt.

Bevorzugt ist die Rippe durch eine Sicke gebildet. Hierdurch ist eine einfache und kostengünstige Herstellung der Rippe ermöglicht.

In vorteilhafter Weiterbildung der Erfindung sind zwei Seitenwände gebildet, zwischen die ein Trockenbrennstoffbrikett klemmbar ist. Hierdurch ist die Möglichkeit geschaffen, den Trockenbrennstoff anzuzünden, ohne sich die Finger zu verbrennen, da der Brikett nicht selbst beim Anzünden anzufassen ist, sondern der Halter, der diesen hält.

In bevorzugter Ausgestaltung der Erfindung ist der Spatel zu einer Rückwand umbiegbar. Der Spatel ist dann unter einem Winkel zum Grundkörper ausgerichtet, und fungiert als gut handhabbarer Griff.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Fig. 1: die Platte des Halters in ihrer Ausgangsform;
- Fig. 2: die dreidimensionale Darstellung des Halters nach entsprechender Biegung der in Figur 1 dargestellten Platte;
- Fig. 3: die Anordnung des in Figur 2 dargestellten Halters an einer Konserve und
- Fig. 4: den in Figur 2 dargestellten Halter mit einem Trockbrennstoffbrikett.

Der als Ausführungsbeispiel gewählte Halter ist aus Metall hergestellt. Es sind jedoch auch andere temperaturfeste und biegefähige Materialien verwendbar. Der Halter besteht aus einer Platte 1, welche die Form eines rechteckigen Grundkörpers 2 mit einem angeformten Spatel 3 aufweist. Im Ausführungsbeispiel hat die Platte 1 eine Dicke von 0,5 mm. Der Spatel 3 ist derart an dem Grundkörper 2 angeordnet, dass die Längsmittellinie des Spatels 3 auf der Längsmittellinie des Grundkörpers 2 liegt. Im Ausführungsbeispiel entspricht die Breite des Spatels 3 einem Drittel der Breite des Grundkörpers 2. Entlang seiner Längsmittellinie ist in dem Grundkörper 2 eine Sicke 4 angeordnet, deren Länge im Wesentlichen der Seitenlänge des Grundkörpers 2 entspricht. Beidseitig der Sicke 4 sind jeweils zwei Langlöcher 5 eingebracht. Die Langlöcher 5 sind so positioniert, dass ihre Längsmittellinien genau auf einer gedachten Verlängerung der Längskanten des Spatels 3 liegen. Im Ausführungsbeispiel weisen die Langlöcher 5 alle die gleiche Länge auf. Der Abstand jeweils zweier hintereinander angeordneter Langlöcher 5 beträgt dabei etwa zwei Drittel ihrer Länge.

Zu beiden Seiten der Sicke 4 sind in die Außenkanten des Grundkörpers 2 weitgehend rechteckige Aussparungen 6 eingebracht. Auf ihrer dem Spatel 3 zugewandten Seite weisen die Aussparungen 6 jeweils eine Hinterschneidung 61 auf, wodurch Nasen 8 gebildet sind. Den Nasen 8 gegenüber liegend sind durch die Aussparung 6 Stege 7 gebildet. Der Abstand der durch die Aussparungen 6 gebildeten Längskanten entspricht im Ausführungsbeispiel dem Abstand der orthogonal zur Mittellängslinie des Spatels 3 angeordneten "Querkante" des Grundkörpers 2. Die Herstellung der derart gebildeten Platte 1 kann in einem einzigen Stanzvorgang erfolgen.

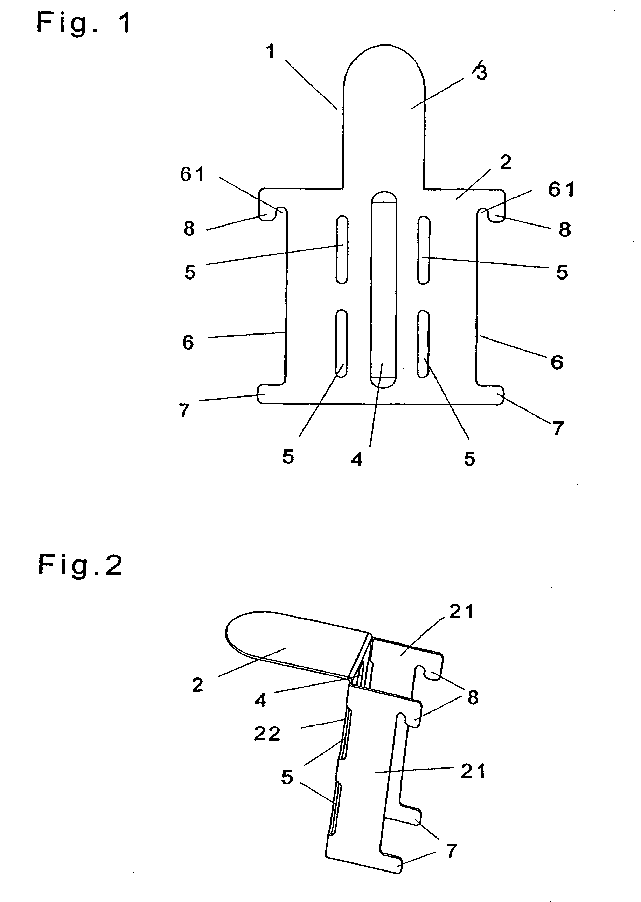

Der Einsatz des Halters gestaltet sich wie folgt: Der Grundkörper 2 der Platte 1 wird zu beiden Seiten entlang der gedachten Verlängerung beider Längskanten des Spatels 3 entlang der Langlöcher 5 im Wesentlichen jeweils rechtwinklig in Richtung der Ausbuchtung der Sicke 4 umgebogen, sodass die Stege 7 und die Nasen 8 jeweils zueinander benachbart angeordnet sind. Hierdurch sind zwei Seitenwände 21 gebildet, die an einer dann hervorgerufenen Rückwand 22 anliegen. Der Spatel 3 wird in entgegengesetzter Richtung im rechten Winkel zur Rückwand 22 umgebogen (Figur 2).

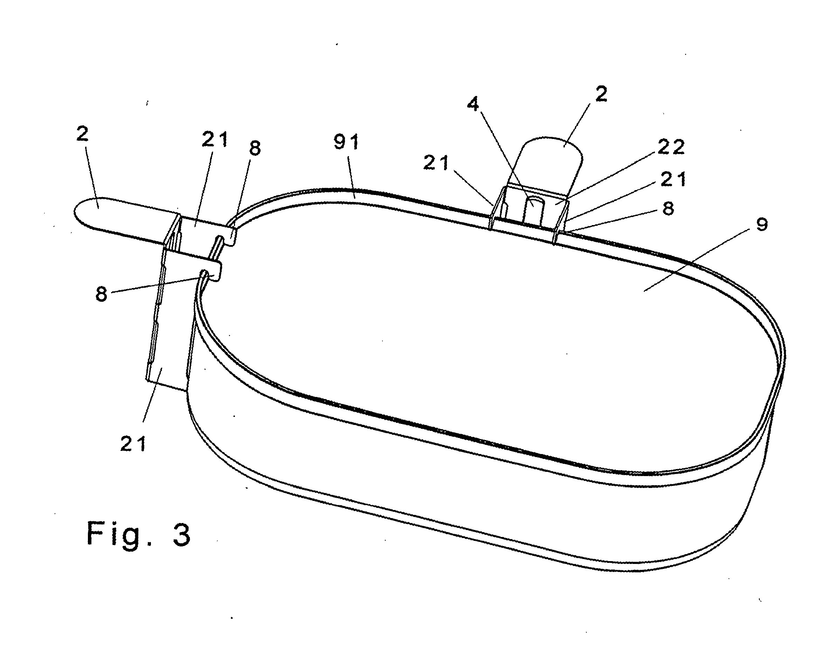

Wie Figur 3 zu entnehmen, wird eine Konserve 9 durch den Halter derart aufgenommen, dass sie auf den im Wesentlichen parallel angeordneten Stegen 7 aufliegt und die Außenwand der Konserve 9 an den Kanten der Seitenwände 21 anliegt. Die Bördelkante 91 der Konserve 9 greift dabei in die Hinterschneidungen 61 der Seitenwände 21 ein und ist durch die überragenden Nasen 8 gehalten. Die Handhabung der so in den Halter eingesetzten Konserve 9 erfolgt über den als Griff fungierenden abgewinkelten Spatel 3. Wie in Figur 3 erkennbar, kann der Halter in jeder Position an der Konserve 9 angeordnet werden. Durch den abgewinkelten, als Griff fungierenden Spatel 3 ist eine zuverlässige und ergonomisch günstige Handhabung hervorgerufen.

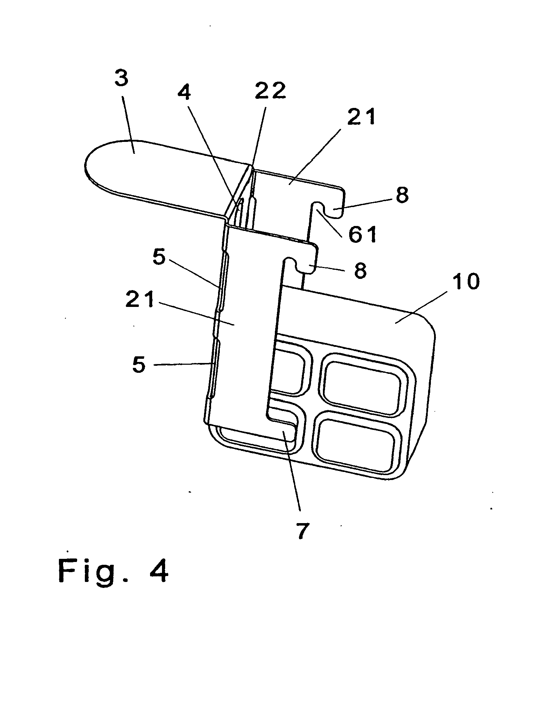

Zudem besteht bei dem erfindungsgemäßen Halter die Möglichkeit, Trockenbrennstoffbriketts, beispielsweise in Form von Würfeln (Figur 4), gefahrlos anzuzünden. Hierzu wird der Halter entsprechend der vorstehend dargestellten Weise verbogen. Die Seitenwände 21 werden vorteilhaft etwas über 90° von der in Figur 1 dargestellten Ausgangspositon umgebogen, sodass die Seitenwände 21 zueinander nicht parallel ausgerichtet sind. Der anzuzündende Trockenbrennstoffbrikett 10 kann dann zum Anzünden zwischen die Seitenwände 21 geschoben werden und ist dort dann geklemmt gehalten (Figur 4). Mit der einen Hand wird dann der Halter einschließlich Würfel an dem als Griff fungierenden Spatel 3 gefasst, während mit der anderen Hand der Würfel angezündet wird, ohne Gefahr zu laufen, sich beim Anzünden die Finger beim Halten des Würfels zu verbrennen.

## Patentansprüche

1. Halter, insbesondere zur Handhabung von direkt über einem Feuer beheizbaren Konserven, im Wesentlichen bestehend aus einer Platte, **dadurch gekennzeichnet, dass** die Platte (1) die Form eines weitgehend rechteckigen Grundkörpers (2) mit angeformten Spatel (3) aufweist, wobei in der Verlängerung beider Längskanten des Spatels (3) jeweils mindestens eine Aussparung (5) in den Grundkörper (2) eingebracht ist und in mindestens eine Außenkante des Grundkörpers (2) eine weitgehend rechteckige Aussparung (6) vorgesehen ist.

2. Halter nach Anspruch 1, **dadurch gekennzeichnet, dass** die Aussparung (6) mindestens eine Hinterschneidung (61) aufweist, wodurch eine Nase (8) gebildet ist.

3. Halter nach Anspruch 2, **dadurch gekennzeichnet, dass** die Hinterschneidung (61) auf der dem Spatel (3) zugewandten Seite der Platte (1) angeordnet ist.

4. Halter nach einem der Ansprüche 1 bis 3, **dadurch gekennzeichnet, dass** der Halter aus Metall hergestellt ist.

5. Halter nach einem der Ansprüche 1 bis 4, **dadurch gekennzeichnet, dass** die Platte (1) mindestens eine Rippe (4) aufweist.

6. Halter nach Anspruch 5, **dadurch gekennzeichnet, dass** die Rippe (4) auf der Längsmittellinie der Platte (1) angeordnet ist.

7. Halter nach Anspruch 5 oder 6, **dadurch gekennzeichnet, dass** die Rippe (4) durch eine Sicke gebildet ist.

8. Halter nach einem der Ansprüche 1 bis 7, **dadurch gekennzeichnet, dass** zwei Seitenwände (21) gebildet sind, zwischen die ein Trockenbrennstoffbrikett (10) klemmbar ist.

9. Halter nach einem der Ansprüche 1 bis 8, **dadurch gekennzeichnet, dass** der Spatel (3) zu einer Rückwand (22) umbiegbar ist.

## Claims

1. Holder, in particular for handling canned foods when warming these directly over a fire, consisting principally of a plate, **characterised in that** the plate (1) has the shape of a largely rectangular main body (2) with an integrated spatula (3) where the extension of the two lengthwise edges of the spatula (3) at least one recess (5) is provided in the main body (2) and a largely rectangular recess (6) is provided in at least one outer edge of the main body (2).

2. Holder according to claim 1, **characterised in that** the recess (6) has at least one undercut (61) thereby forming a catch (8).

3. Holder according to claim 2, **characterised in that** the undercut (61) is located on the side of the plate facing the spatula (3).

4. Holder according to claims 1 to 3, **characterised in that** the holder is manufactured of metal.

5. Holder according to one of the claims 1 to 4, **characterised in that** the plate (1) has at least one rib (4).

6. Holder according to claim 5, **characterised in that** the rib (4) is located on the centre lengthwise line of the plate (1).

7. Holder according to claim 5 or 6, **characterised in that** the rib (4) is formed by a bead.

8. Holder according to one of the claims 1 to 7, **characterised in that** two side walls (21) are formed, between which a dry-fuel briquette (10) can be clamped.

9. Holder according to one of the claims 1 to 8, **characterised in that** the spatula (3) can be bent into a rear wall (22).

## Revendications

1. Poignée, notamment pour manier des conserves directement chauffables au dessus d'un feu, comprenant essentiellement une plaque, **caractérisé en que** la plaque (1) se présente sous la forme d'un corps de base (2) principalement rectangulaire à spatule (3) formée contre, sachant qu'a été ménagé respectivement au moins un évidement (5) dans le corps de base (2), dans le prolongement des deux bords longitudinaux de la spatule (3), et en ce que dans au moins une arête extérieure du corps de base (2) est prévu un évidement (6) principalement rectangulaire.

2. Support selon revendication 1, **caractérisé en ce que** l'évidement (6) présente au moins une dépouille (61) créant une saillie (8).

3. Support selon la revendication 2, **caractérisé en ce que** la dépouille (61) est agencée sur le côté de la plaque (1) tourné vers la spatule (3).

4. Support selon l'une des revendications 1 à 3, **caractérisé en ce que** le support a été fabriqué en métal.

5. Support selon l'une des revendications 1 à 4, **caractérisé en ce que** la plaque (1) comporte au moins une nervure (4)

6. Support selon la revendication 5, **caractérisé en ce que** la nervure (4) est agencée sur la ligne médiane de la plaque (1).

7. Support selon la revendication 5 ou 6, **caractérisé en ce que** la nervure (4) est formée par une moulure.

8. Support selon l'une des revendications 1 à 7, **caractérisé en ce que** deux parois latérales (21) sont formées, entre lesquelles il est possible de brider une briquette de combustible sec (10)

9. Support selon l'une des revendications 1 à 8, **caractérisé en ce que** la spatule (3) est coudable pour former une paroi arrière (22).
